# EUROPEAN PATENT APPLICATION

(11) **EP 1 585 216 A2**
(43) Date of publication of application: **12.10.2005**
(21) Application number: 04015711.7
(22) Date of filing: 03.07.2004
(51) Int. Cl.: H03G 3/00

(54) **Continuous dual tone controlled squelch system**

(30) Priority: 08.04.2004 US 821355
(71) Applicant: Lee, Wai Tin, N.T. Hong Kong (CN)
(72) Inventor: Lee, Wai Tin, N.T. Hong Kong (CN)
(74) Representative: Dreiss, Fuhlendorf, Steimle & Becker

(57) **Abstract**

The continuous dual tone controlled squelch system may use dual frequency tones to increase continuous tone controlled squelch system channel capacity in a frequency bandwidth of approximately 67 Hz to 251 Hz. Each frequency intermediate each adjacent frequency channel of an existing continuous tone controlled squelch system may be selected. Each frequency so selected that may be less than 100 Hz or greater than 200 Hz may then be eliminated. Then all combinations of two of the frequencies remaining may be selected as dual frequency tones.

## Description

### BACKGROUND OF THE INVENTION

This invention relates to continuous tone controlled squelch systems (CTCSS) and the tone frequency selection process. The new tone frequency selection system and method may increase the tone frequency channels available to a CTCSS system by use of a dual tone system in combination with the generally currently practiced single tone system.

In some frequency modulation radio communication systems, a tone of radio frequency that may be below that which may be reproduced by a radio receiver in the voice band is transmitted to activate a selected receiver or receivers. This may be done to provide privacy and prevent undesired messages from being produced by other receivers during the transmission or may be used to squelch unwanted transmission reception by a receiver. For example, in a two-way radio system a continuous sub-audio, i.e., below approximately 300Hz, single frequency tone may be selected for transmission between the two parties that may be transmitted with the voice signal. The method that may be commonly referred to as CTCSS generates the continuous tone signal combined with the audio or voice signal to be transmitted from a sender to an intended receiver. The receiver may then process the voice signal once it has detected the correct tone signal. Signals received by the receiver that do not have the proper continuous tone signal will not be processed. In a continuous tone controlled squelch system the tones may normally be arranged in a frequency band well below 300Hz to reduce interference with any voice or audio signal transmitted.

For general use audio transmission systems that may be referred to as family radio systems (FRS) there may have developed a de facto standard concerning the CTCSS frequency band and the number of channels or frequencies usable in such band. For many produced and sold transmitters and receivers the CTCSS band may be in the frequency range of approximately 67.0 Hz to 250.3 Hz with individual or single tone frequencies selected to provide 38 separate frequencies or channels. Such a frequency allocation may be represented by the following Table I.

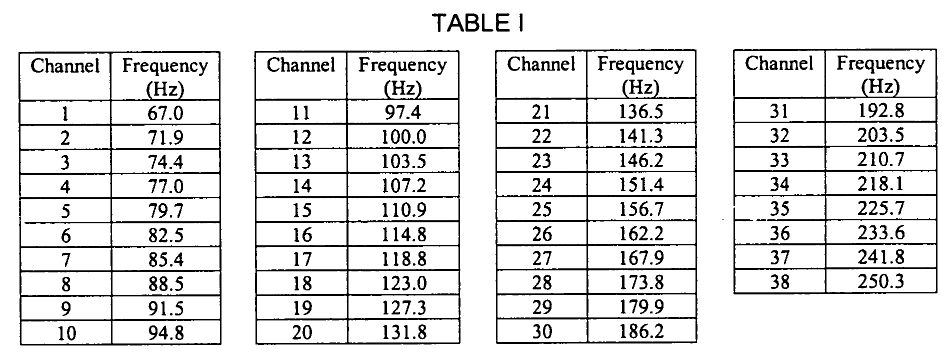

This type of frequency allocation may be chosen to provide as many channels as possible in the frequency band balanced with other considerations such as: maintaining adjacent frequency channel separation to minimize false detection or crosstalk; setting the lowest frequency channel at a high enough frequency for receiver response in a maximum detection time that may be recommended by the Electronic Industry Association (EIA); and setting the highest frequency channel at a low enough frequency to minimize interference with the transmitted voice or audio signal that may be limited by a voice band high pass filter characteristic.

### SUMMARY OF THE INVENTION

The present invention is directed to a method that may use dual frequency tones to increase continuous tone controlled squelch system channel capacity in a frequency bandwidth of approximately 67 Hz to 251 Hz. Each frequency intermediate each adjacent frequency channel of an existing continuous tone controlled squelch system may be selected. Each frequency so selected that may be less than 100 Hz or greater than 200 Hz may then be eliminated. Then all combinations of two of the frequencies remaining may be selected as dual frequency tones.

These and other features, aspects and advantages of the present invention will become better understood with reference to the following drawings, description and claims.

### BRIEF DESCRIPTION OF THE DRAWINGS

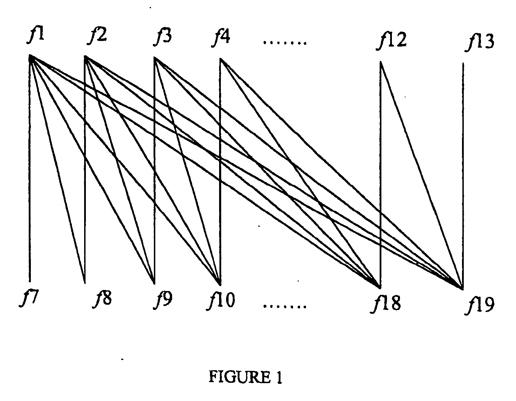

Figure 1 illustrates a mapping of one of the dual frequency selection criteria according to an embodiment of the invention.

### DETAILED DESCRIPTION

The following detailed description represents the best currently contemplated modes for carrying out the invention. The description is not to be taken in a limiting sense, but is made merely for the purpose of illustrating the general principles of the invention.

The de facto CTCSS frequency band and channel allocation system may be modified to increase the available frequency allocations within the bandwidth and thereby increase the number of users of a particular radio communication system using a CTCSS process. The system may include transmission and detection of dual frequency tones that may be interleaved with the existing CTCSS current 38 channel system. Using a dual tone system and method may allow mC₂ channels where m is the maximum number of frequencies allowed in the CTCSS band and the equation is notation for the number of ways of selecting any combination of 2 numbers out of m numbers. False detection may be reduced due to the requirement to detect two tones instead of one.

One process for allocation of frequency components in a continuous dual tone controlled squelch system (CDTCSS) for CTCSS bandwidth may be to maintain compatibility with existing CTCSS systems that may only use the 38 frequency channels. This may be accomplished by using frequencies other than the 38 existing channels in a dual channel system. The dual tone frequencies may then be positioned between the 38 existing frequencies, for example, between channel 13 at 103.5 Hz and channel 14 at 107.2 Hz a frequency tone of (103.5 + 107.2)/2 = 105.35 Hz may be selected. Using this method the available frequency for a dual tone made of operation may be a total of 37 frequencies as illustrated in Table II.

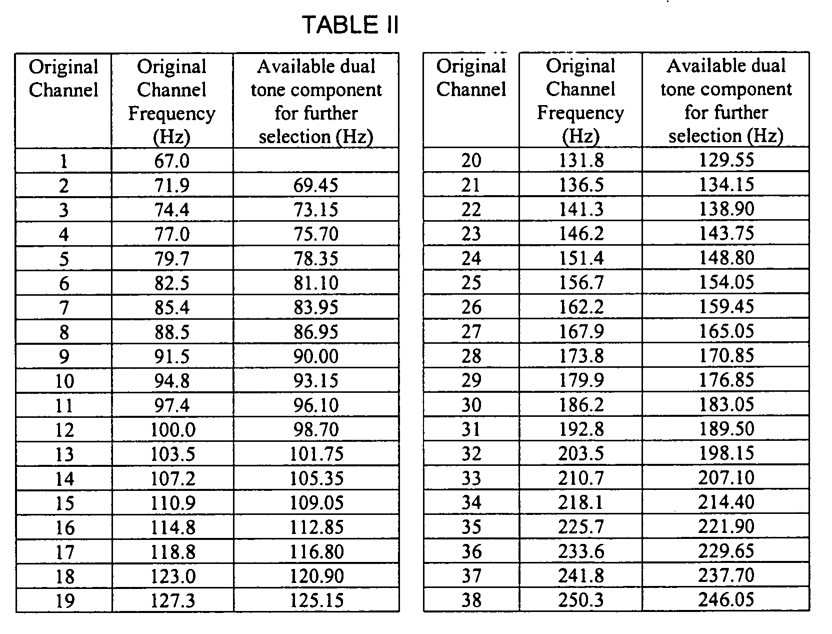

Further modifications to the selection of frequencies for use in a dual tone system may be made to improve performance or minimize equipment costs. For example, to reduce long decoder response time events, frequencies below 100 Hz may not be used. To reduce the requirement for complex filter characteristics for a low pass filter for the CTCSS band and a high pass filter for the voice band, frequencies higher than 200 Hz may not be used. Using these criterion, the available frequencies for use in a dual tone mode of operation may begin at 105.35 Hz and end at 198.15 Hz. This may allow for use of 19 frequencies as illustrated in Table III.

**Table III**

| | Available dual tone component (Hz) |
|---|---|
| *f*1 | 109.05 |
| *f*2 | 112.85 |
| *f*3 | 116.80 |
| *f*4 | 120.90 |
| *f*5 | 125.15 |
| *f*6 | 129.55 |
| *f*7 | 134.15 |
| *f*8 | 138.90 |
| *f*9 | 143.75 |
| *f*10 | 148.80 |
| *f*11 | 154.05 |
| *f*12 | 159.45 |
| *f*13 | 165.05 |
| *f*14 | 170.85 |
| *f*15 | 176.85 |
| *f*16 | 183.05 |
| *f*17 | 189.50 |
| *f*18 | 198.15 |

Generally, any combination of two frequencies from Table III may be used to define a two tone channel, i.e., there may be a total of 153 combinations. However, to reduce the complexity of filter characteristic and requirements for band pass filters for filtering the dual tone components, a combination of dual tones may be selected to separate the two frequency combinations by at least 6 frequency steps as the frequency separation steps are presented in Table III. The selection or mapping of the two frequencies to present a dual tone frequency may be illustrated as in Figure 1. A total of 78 frequency combinations may be structured.

Using the above described criteria a CDTCSS system may be structured that may use the currently used CTCSS channels 1 through 38. Dual tone frequency channel numbers may begin at 39 and may be ordered as prescribed by a particular user. Referring to Table IV, as an example, the lower number channels may use the relatively lower dual tone frequencies available, i.e., not use frequencies at 198.15 Hz for the high tone frequency, for the channel numbers 39 through 99. This may be useful for radio systems that may only have a two digit channel selection system. The designations A01 through A05 for dual tone frequency channels may be used for baby or child monitoring applications as an example.

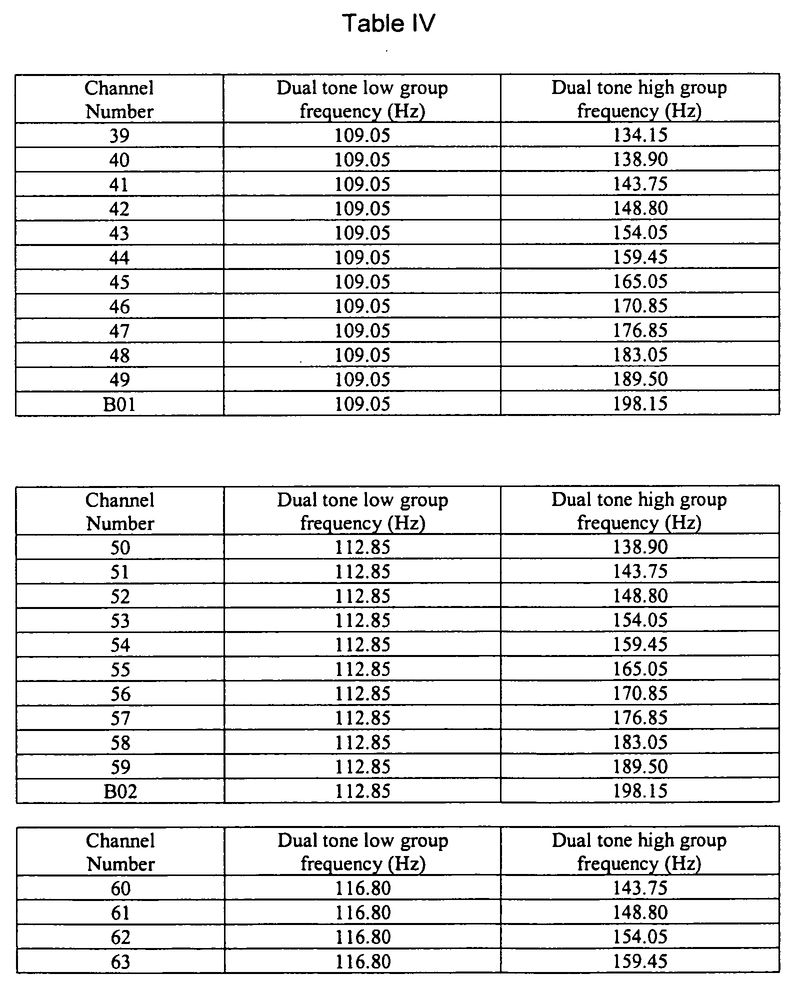

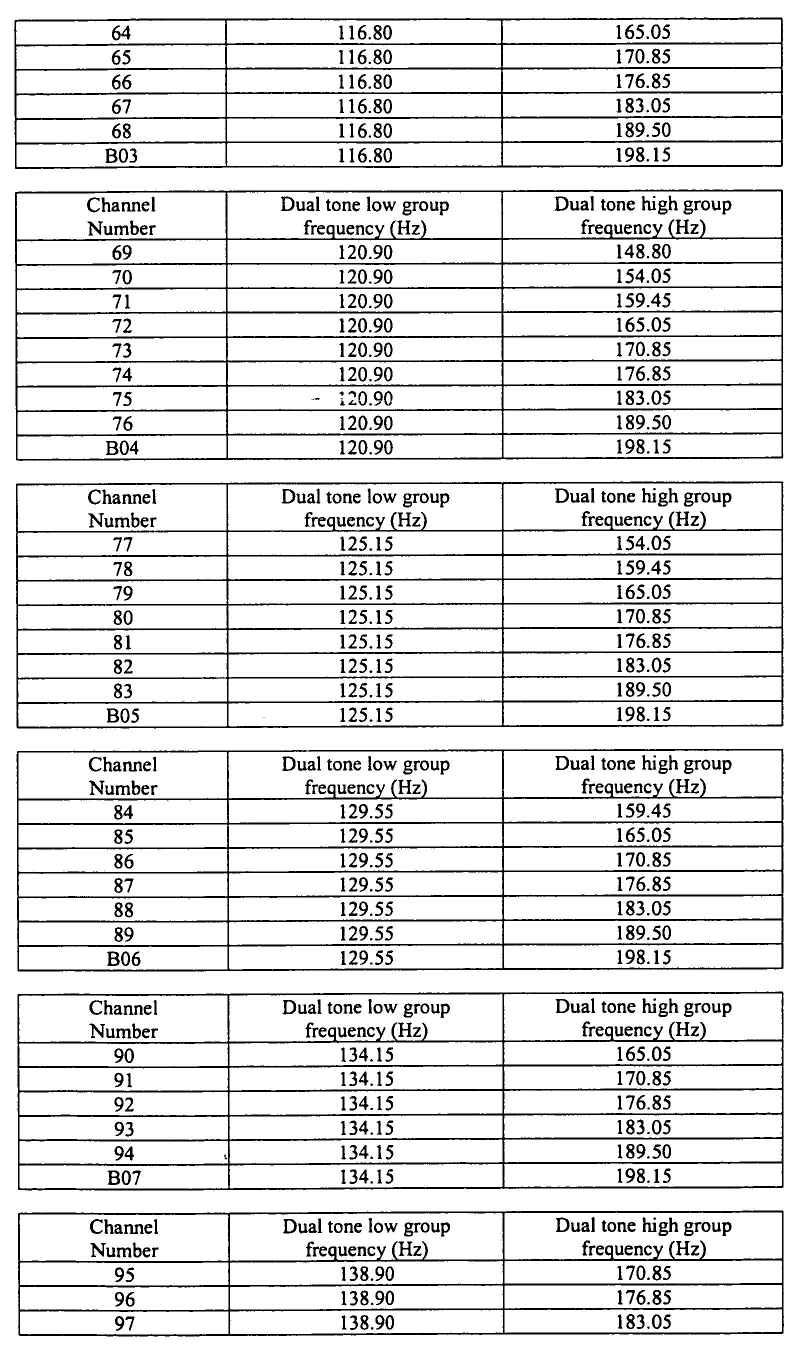

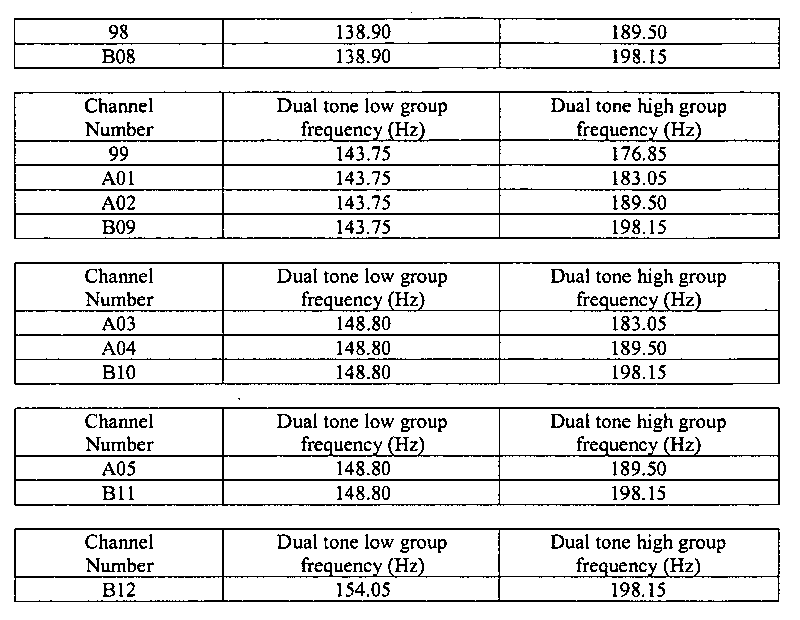

While the invention has been particularly shown and described with respect to the illustrated embodiments thereof, it will be understood by those skilled in the art that the foregoing and other changes in form and details may be made therein without departing from the spirit and scope of the invention.

## Claims

1. A method for use of dual frequency tones to increase single frequency tone continuous tone controlled squelch system channel capacity in a frequency bandwidth of approximately 67 Hz to 251 Hz comprising:
a) selecting a frequency intermediate each adjacent single frequency tone channel of an existing continuous tone controlled squelch system;
b) eliminating each frequency selected in step a) that is less than 100 Hz and each frequency that is greater than 200 Hz; and
c) selecting all combinations of two of the frequencies remaining after step b) as dual frequency tones.

2. The method as in claim 1 wherein step c) further includes the requirement for selecting all combinations of two of the frequencies remaining wherein each combination of two frequencies has at least 6 frequency steps separation.

3. The method as in claim 2 wherein each combination of two frequencies allows use of existing equipment having a two digit channel operating system.

4. The method as in claim 1 further comprising:
d) selecting a channel number for each dual frequency tone in accordance with the following table:

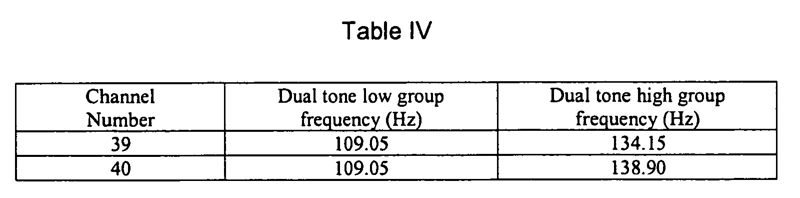

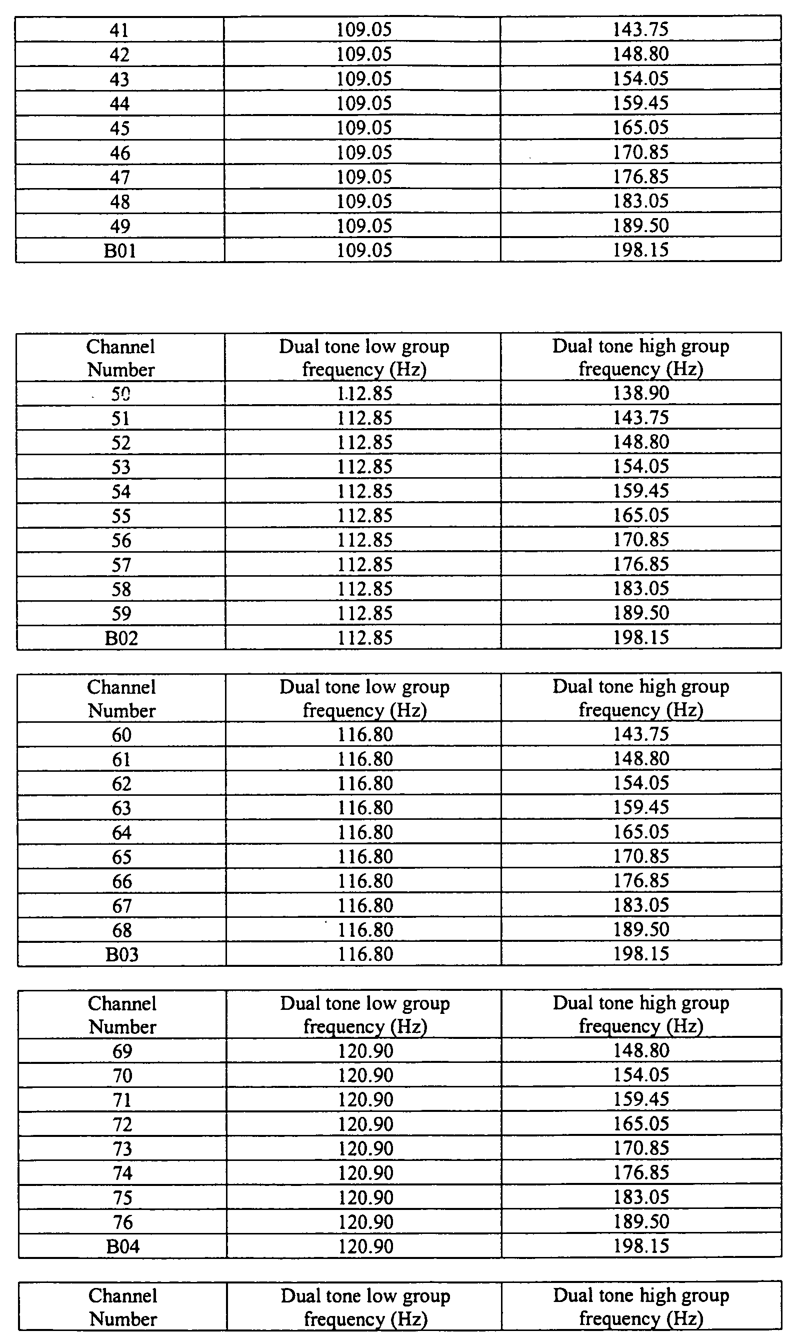

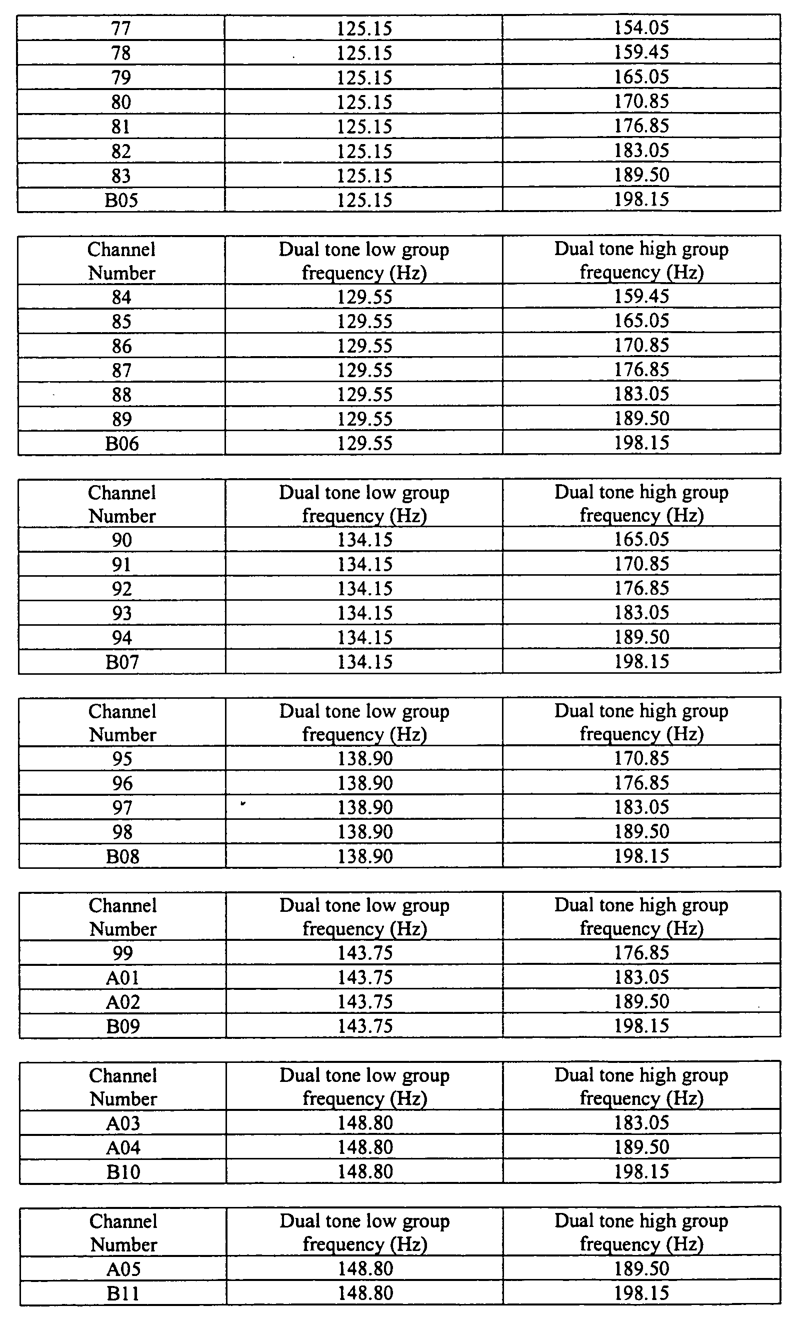

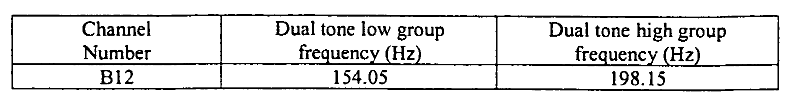

5. The method as in claim 1 further comprising:
d) transmission of a combined single frequency tone and dual frequency tone in combination with an audio signal for receipt by a receiver.

6. A communication system produced to transmit and receive signals having a frequency structure according to the methods of claim 1.

7. A communication system produced to transmit and receive signals having a frequency structure according to the methods of claim 2.

8. A communication system produced to transmit and receive signals having a frequency structure according to the methods of claim 3.

9. A communication system produced to transmit and receive signals having a frequency structure according to the methods of claim 4.

10. A communication system produced to transmit and receive signals having a frequency structure according to the methods of claim 5.
